# EUROPEAN PATENT SPECIFICATION

(11) **EP 3 953 628 B1**
(45) Date of publication and mention of the grant of the patent: **07.06.2023**
(21) Application number: 19720428.2
(22) Date of filing: 11.04.2019
(51) Int. Cl.: H02G 3/30, F16L 3/02, H02G 3/00

(54) **IMPROVED HOOK FOR SUSPENDING CABLES OR HOSE PIPES**
VERBESSERTER HAKEN ZUM AUFHÄNGEN VON KABELN ODER SCHLÄUCHEN
CROCHET AMÉLIORÉ POUR SUSPENDRE DES CÂBLES OU DES TUYAUX SOUPLES

(43) Date of publication of application: 16.02.2022
(73) Proprietor: Pensioen B.V., 3832 GK Leusden (NL)
(72) Inventor: WESTERBEEK VAN EERTEN, Maurits Frederik, 3832 GJ Leusden (NL); WESTERBEEK VAN EERTEN, David Constantijn, 3832 GX Leusden (NL)
(74) Representative: Arnold & Siedsma
(86) International application number: PCT/EP2019/059310
(87) International publication number: WO 2020/207590

(56) References cited:
- EP-A2- 1 505 326
- WO-A2-2008/085476
- US-A- 5 556 903

## Description

The present invention relates to an improved hook for cable management during, for example, maintenance, turnarounds, construction works and industrial works. The present invention especially relates to an improved hook of an injection molded glass-fiber reinforced thermoplastic resin for suspending cables or hose pipes. The present improved hooks are capable of safely bearing high loads in the range of 30 to 400 kg. The present invention also relates to methods for providing the present improved hooks.

Hooks are well-known and are used on a wide scale for fastening and/or bearing cables or hose pipes such as, for example, electricity cables, welding cables, air hoses, hydraulic hoses and fire hoses. The hooks are useful wherever such cables or hose pipes are used. Examples are the (petro)chemical industry, the offshore industry, the steel and aluminum industry, the ship building industry, oil and gas extraction, the mining industry, the prefabricated construction industry and power stations. Suspending the cables or hose pipes from the wall or the ceiling prevents people tripping over them. Moreover, it reduces the risk of cables or hose pipes becoming damaged, which could result in the leaking of noxious substances or the occurrence of short circuiting, with the consequence of fire hazard.

Although cables and hose pipes can be fastened to the ceiling or to the wall by means of conventional hooks, the danger of unintentional and undesirable contact still exists, with the above-mentioned associated hazards. One can easily bump into such hook or the cables or hose pipes it carries, at the risk of, for example, head injuries. Moving hooks with wires of cables such as, for example, aboard a ship is extremely dangerous and may cause lethal injuries.

European patent EP 1 505 326 discloses a hook for bearing cables or hose pipes providing improved safety for cable management. However under conditions such as fire. cold, heat or prolonged light exposure, particularly occurring in more extreme natural or man made environments, improved safety for cable management is desired and increasingly demanded in the art and imposed by industry standards. US 5,556,903 discloses a flame retarding resin composition comprising a thermoplastic resin selected from the group of polycarbonate, polybutylene terephthalate, polyethylene terephthalate, and blends and alloys of polycarbonate with polybutylene terephthalate, polyethylene terephthalate and acrylonitrile-butadiene-styrene, and a flame retarding amount of a melt-blendable, solid polybrominated triphenyl phosphate ester selected from tris(dibromophenyl)phoshate and bis(tribromophenyl)phenylphosphate, and less than 5% antimony oxide or halogenated organic.

Accordingly, there is a need in the art for an improved hook for bearing or suspending cables and hoses. The present need in the art is especially a need in the context of (heavy) industrial applications such as in the (petro)chemical industry, the offshore industry, the steel and aluminum industry, the ship building industry, oil and gas extraction, the mining industry, the prefabricated construction industry and power stations and plants.

It is an object of the present invention, amongst other objects, to meet the above need in the art.

According to the present invention, the above object, amongst other objects, is met by hooks, methods and uses as outlined in the appended claims.

Specifically, the above object, amongst other objects, is met by hooks for suspending cables and hoses, wherein the hooks are comprised of 45 to 800 grams of an injection molded composition comprised of polybutylene terephthalate, or PBT, 18% to 22% per total weight of the composition glass-fiber, one or more flame retardants and one or more UV stabilizers; and the hooks have a maximum load bearing of 0.3 to 0.8 kg per gram composition. Within the context of the present invention, the further addition of pigments and some polyethylene (PET) to the composition are contemplated.

The present hooks meet a new industry standard that came into effect at the start of 2019. The present hooks prevent slips, trips and falls incidents, which account for a third of all reported major injuries. Often these accidents result in broken ankles, wrists or other fractures.

British Standard recently adopted the Requirements for Electrical Installations [BS7671:2018] for the electrical design industry. This standard is developed after the deaths of two firefighters at Harrow Court, Hertfordshire, in 2005. The two firefighters got entangled as a result of the collapse of an electrical installation during a fire. The implemented standard states that it requires cables to be adequately supported against their premature collapse in the event of a fire.

The present hooks, although providing a similar load bearing capacity, are different from the hooks disclosed in EP 1 505 326 with respect to, for example, thermoplastic resin and UV resistance. Further, the hooks are flame retardant. For example, the present hooks with a dimension (h) of 38 cm can safely carry 265 kg static load, of 30 cm 190 kg static load, of 23 cm 75 kg static load and of 15 cm 40 kg static load.

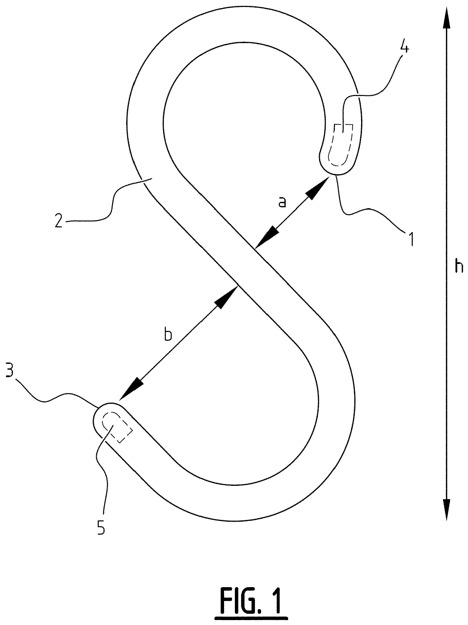

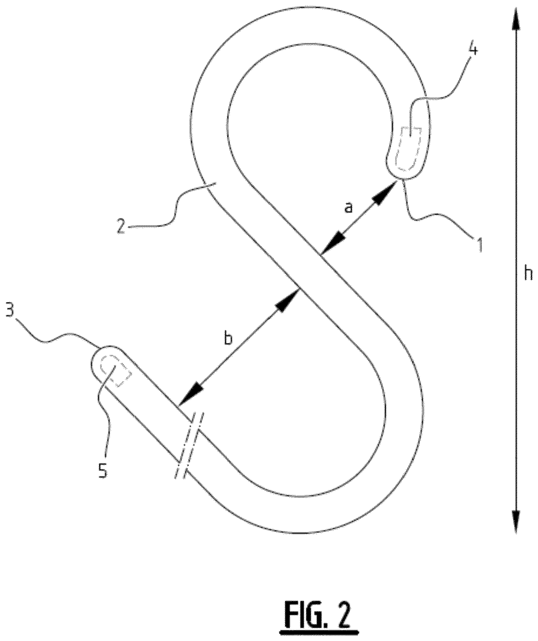

According to a preferred embodiment, the present hooks for suspending cables and hoses have the shape of a hook depicted in Figures 1 and 2.

The hook illustrated in Figures 1 and 2 comprise a first spherical end 1 and a second spherical end 3, which spherical ends are connected with each other by an S-shaped body 2. The first spherical end 1 is optionally provided with an opening 4. The second spherical end 3 is optionally provided with an opening 5. With the aid of these openings the hook may be secured, for example, with plastic binders. The height h of the hook may vary from 5 to 75 cm. Suitable values for a are between 2 to 8 cm, such as 3, 4, 5, 6 or 7 cm and for b 2 to 15 cm, such as 3, 4, 5, 6, 7, 8, 9, 10, 11, 12, 13 or 14 cm.

Polybutylene terephthalate, or PBT, is a thermoplastic engineering polymer that is used, amongst others, as an insulator in the electrical and electronics industries. It is a thermoplastic (semi-)crystalline polymer, and a type of polyester. PBT is resistant to solvents, shrinks very little during forming, and is mechanically strong.

According to yet another preferred embodiment, the present one or more flame retardants are selected from the group consisting of minerals, organohalogen compounds and organophosphorus compounds.

The present minerals are preferably selected from the group consisting of aluminums hydroxide, magnesium hydroxide, huntite and hydromagnesite, hydrates, red phosphorus, boron compounds and borates.

The present organohalogen compounds are preferably selected from the group consisting of chlorendic acid derivatives, chlorinated paraffins; organobromines, decabromodiphenyl ether, decabromodiphenyl ethane, polymeric brominated compounds, brominated polystyrenes, brominated carbonate oligomers, brominated epoxy oligomers, tetrabromophthalic anyhydride, tetrabromobisphenol A) and hexabromocyclododecane optionally in combination with antimony tri- or pentoxide or sodium antimonate.

The present organophosphorus compounds are preferably selected from the group consisting of triphenyl phosphate, resorcinol bis(diphenylphosphate), bisphenol A diphenyl phosphate, tricresyl phosphate, phosphonates, dimethyl methylphosphonate, phosphinates, and aluminum diethyl phosphinate.

Other flame retardant contemplated for preferred embodiments of the present invention are flame retardants selected from the group consisting of tris(2,3-dibromopropyl) phosphate, chlorinated organophosphates, tris(1,3-dichloro-2-propyl)phosphate and tetrakis(2-chlorethyl)dichloroisopentyldiphosphate.

Stabilizers are a class of chemical additives commonly added to polymeric materials, such as plastics, to inhibit or retard their degradation. Polymers can be subject to various degradation processes, including oxidation, UV-damage, thermal degradation, ozonolysis, or combinations thereof like photo-oxidation. These processes all degrade the polymer on a chemical level, leading to chain scission that can adversely affect its mechanical properties such as strength and malleability, as well as its appearance and color.

According to the present invention, the present hooks for suspending cables and hoses preferably comprise one or more UV stabilizers selected from the group consisting of oxanilides, benzophenones, benzotriazoles, hydroxyphenyltriazines and hindered amine light stabilizers. The UV absorbers generally dissipate the absorbed light energy from UV rays as heat by reversible intramolecular proton transfer. This reduces the absorption of UV rays by the polymer matrix and hence reduces the rate of degradation and weathering.

The ability of hindered amine light stabilizers (HALS or HAS) to scavenge radicals produced by degradation or weathering may be explained by the formation of aminoxyl radicals through a process known as the Denisov Cycle. The aminoxyl radical (N-O•) combines with free radicals in polymers: N-O• + R• → N-O-R. Although they are traditionally considered as light stabilizers, they can also stabilize thermal degradation.

According to still another preferred embodiment, the present invention relates to hooks for suspending cables and hoses, wherein the present an injection molded composition further comprises heat stabilizers, preferably metallic soaps or calcium stearate.

The present injection molded compositions can preferably further comprise one or more fluorescent compounds or particles.

According to an especially preferred embodiment, the present hooks for suspending cables and hoses are comprised of Valox^{™}Resin 4521, Arnite^{®}TV4 240 S supplemented with one or more UV stabilizers; or RAMSTER PF321G4NT supplemented with one or more UV stabilizers.

Valox^{™}Resin 4521(SABIC Innovative Plastics B.V., Bergen op Zoom, The Netherlands) is a 20% glass filled, high flow, flame retardant polybutylene terephthalate (PBT) of injection moldable grade.

Arnite^{®}TV4 240 S (DSM, Heerlen, The Netherlands) is part of the Arnite^{®} (PBT, PET and blends) family and is a high-performance engineering plastics that combine high strength and rigidity with excellent processing characteristics.

RAMSTER PF321G4NT (Polyram Plastic Industries LTD, Israel) is a 20% glass fiber reinforced, flame Retardant PBT polymer for injection molding applications.

According to another embodiment, the present invention relates to methods for providing the present hooks for suspending cables or hoses, the method comprises the steps of:
a) preparing a mixture of a thermoplastic PBS resin, 18% to 22% per total weight of the composition glass-fiber, one or more flame retardants and one or more UV stabilizers as defined in the embodiments above ;
b) drying and compounding the mixture of step (a) to allow injection molding;
c) injecting the compounded mixture of step (b) into a mold for a hook with a shape as depicted in figures 1 or 2;
d) cooling and subsequently removing the injection molded hook from the mold.

According to another embodiment, the present invention relates to the use of the present hooks for suspending cables or hoses for (heavy) industrial applications, preferably cable management in the (petro)chemical industry, the offshore industry, the steel and aluminum industry, the ship building industry, oil and gas extraction, the mining industry, the prefabricated construction industry and power stations and plants.

## Claims

1. Hook for suspending cables and hoses, said hook is comprised of 45 to 800 grams of an injection molded composition comprised of a polybutylene terephthalate resin, 18% to 22% per total weight of the composition glass-fiber, one or more flame retardants and one or more UV stabilizers; and said hook has a maximum load bearing of 0.3 to 0.8 kg per gram composition.

2. Hook for suspending cables and hoses according to claim 1, said hook has the shape of Having a first spherical end (1) and a second spherical end (3), said speherical ends (1,3) being connected with each other by an S-shaped body (2).

3. Hook for suspending cables and hoses according to claim 1 or claim 2, wherein said one or more flame retardants are selected from the group consisting of minerals, organohalogen compounds and organophosphorus compounds.

4. Hook for suspending cables and hoses according to claim 3, wherein said minerals are selected from the group consisting of aluminium hydroxide, magnesium hydroxide, huntite and hydromagnesite, hydrates, red phosphorus, boron compounds and borates.

5. Hook for suspending cables and hoses according to claim 3, wherein said organohalogen compounds are selected from the group consisting of chlorendic acid derivatives, chlorinated paraffins; organobromines, decabromodiphenyl ether, decabromodiphenyl ethane, polymeric brominated compounds, brominated polystyrenes, brominated carbonate oligomers, brominated epoxy oligomers, tetrabromophthalic anyhydride, tetrabromobisphenol A) and hexabromocyclododecane, optionally in combination with antimony tri- or pentoxide or sodium antimonate.

6. Hook for suspending cables and hoses according to claim 3, wherein said organophosphorus compounds are selected from the group consisting of triphenyl phosphate, resorcinol bis(diphenylphosphate), bisphenol A diphenyl phosphate, tricresyl phosphate, phosphonates, dimethyl methylphosphonate, phosphinates, and aluminium diethyl phosphinate.

7. Hook for suspending cables and hoses according to claim 1 or claim 2, wherein said one or more flame retardants are selected from the group consisting of tris(2,3-dibromopropyl) phosphate, chlorinated organophosphates, tris(1,3-dichloro-2-propyl)phosphate and tetrakis(2-chlorethyl)dichloroisopentyldiphosphate.

8. Hook for suspending cables and hoses according to any one of the claims 1 to 7, wherein said one or more UV stabilizers are selected from the group consisting of oxanilides, benzophenones, benzotriazoles, hydroxyphenyltriazines and hindered amine light stabilizers.

9. Hook for suspending cables and hoses according to any one of the claims 1 to 8, wherein said injection molded composition further comprises heat stabilizers.

10. Hook for suspending cables and hoses according to claim 9, wherein said heat stabilizers are selected from the group consisting of metallic soaps and calcium stearate.

11. Hook for suspending cables and hoses according to any one of the claims 1 to 10, wherein said injection molded composition further comprises one or more fluorescent compounds or particles, pigments and/or polyehtylene.

12. Method for providing a hook for suspending cables or hoses according to any one of the claims 1 to 11, the method comprises the steps of:
a) preparing a mixture of a thermoplastic polyester resin, 18% to 22% per total weight of the mixture glass-fiber, one or more flame retardants and one or more UV stabilizers as defined in any one of the claims 1 to 11;
b) drying and compounding the mixture of step (a) to allow injection molding;
c) injecting the compounded mixture of step (b) into a mold for a hook with a S-shaped body;
d) cooling and subsequently removing the injection molded hook from said mold.

13. Use of a hook for suspending cables or hoses according to any one of the claims 1 to 11 for industrial applications, preferably cable management in the (petro)chemical industry, the offshore industry, the steel and aluminum industry, the ship building industry, oil and gas extraction, the mining industry, the prefabricated construction industry and power stations and plants.

## Patentansprüche

1. Haken zum Aufhängen von Kabeln und Schläuchen, wobei der Haken aus 45 bis 800 Gramm einer Spritzguss-Zusammensetzung besteht, die ein Polybutylenterephthalat-Harz, 18% bis 22% Glasfasern pro Gesamtgewicht der Zusammensetzung, ein oder mehrere Flammschutzmittel sowie einen oder mehrere UV-Stabilisatoren aufweist; und wobei der Haken eine maximale Tragfähigkeit von 0,3 bis 0,8 kg pro Gramm Zusammensetzung aufweist.

2. Haken zum Aufhängen von Kabeln und Schläuchen nach Anspruch 1, wobei der Haken ein erstes kugelförmiges Ende (1) und ein zweites kugelförmiges Ende (3) aufweist, wobei die kugelförmigen Enden (1, 3) durch einen S-förmigen Körper (2) miteinander verbunden sind.

3. Haken zum Aufhängen von Kabeln und Schläuchen nach Anspruch 1 oder Anspruch 2, wobei das eine oder die mehreren Flammschutzmittel ausgewählt sind, aus der Gruppe, bestehend aus Mineralien, halogenorganischen Verbindungen und phosphororganischen Verbindungen.

4. Haken zum Aufhängen von Kabeln und Schläuchen nach Anspruch 3, wobei die Mineralien ausgewählt sind aus der Gruppe bestehend aus Aluminiumhydroxid, Magnesiumhydroxid, Huntit und Hydromagnesit, Hydraten, rotem Phosphor, Borverbindungen und Boraten.

5. Haken zum Aufhängen von Kabeln und Schläuchen nach Anspruch 3, wobei die halogenorganischen Verbindungen ausgewählt sind, aus der Gruppe, bestehend aus Chlorsäurederivaten, Chlorparaffinen, Organobromen, Decabromdiphenylether, Decabromdiphenylethan, polymeren bromierten Verbindungen, bromierten Polystyrolen, bromierten Carbonatoligomeren, bromierten Epoxyoligomeren, Tetrabromphthalsäureanhydrid, Tetrabrombisphenol A und Hexabromcyclododecan, gegebenenfalls in Kombination mit Antimontrioder -pentoxid oder Natriumantimonat.

6. Haken zum Aufhängen von Kabeln und Schläuchen nach Anspruch 3, wobei die phosphororganischen Verbindungen ausgewählt sind, aus der Gruppe, bestehend aus Triphenylphosphat, Resorcinol Bis(diphenylphosphat), Bisphenol-A-Diphenylphosphat, Trikresylphosphat, Phosphonaten, Dimethylmethylphosphonat, Phosphinaten und Aluminiumdiethylphosphinat.

7. Haken zum Aufhängen von Kabeln und Schläuchen nach Anspruch 1 oder Anspruch 2, wobei das eine oder die mehreren Flammschutzmittel ausgewählt sind, aus der Gruppe, bestehend aus Tris(2,3-dibrompropyl)phosphat, chlorierten Organophosphaten, Tris(1,3-dichlor-2-propyl)phosphat und Tetrakis(2-Chlorethyl)dichlorisopentyldiphosphat.

8. Haken zum Aufhängen von Kabeln und Schläuchen nach einem der Ansprüche 1 bis 7, wobei der eine oder die mehreren UV-Stabilisatoren ausgewählt sind, aus der Gruppe, bestehend aus Oxaniliden, Benzophenonen, Benzotriazolen, Hydroxyphenyltriazinen und sterisch gehinderten Amin-Lichtstabilisatoren.

9. Haken zum Aufhängen von Kabeln und Schläuchen nach einem der Ansprüche 1 bis 8, wobei die spritzgegossene Zusammensetzung weiterhin Wärmestabilisatoren enthält.

10. Haken zum Aufhängen von Kabeln und Schläuchen nach Anspruch 9, wobei die Wärmestabilisatoren ausgewählt sind aus der Gruppe bestehend aus Metallseifen und Calciumstearat.

11. Haken zum Aufhängen von Kabeln und Schläuchen nach einem der Ansprüche 1 bis 10, wobei die Spritzguss-Zusammensetzung weiterhin eine oder mehrere fluoreszierende Verbindungen oder Partikel, Pigmente und/oder Polyethylen enthält.

12. Verfahren zur Herstellung eines Hakens zum Aufhängen von Kabeln oder Schläuchen nach einem der Ansprüche 1 bis 11, wobei das Verfahren die folgenden Schritte aufweist:
a) Herstellen einer Mischung aus einem thermoplastischen Polyesterharz, 18% bis 22% Glasfasern pro Gesamtgewicht der Mischung, einem oder mehreren Flammschutzmitteln und einem oder mehreren UV-Stabilisatoren gemäß einem der Ansprüche 1 bis 11;
b) Trocknen und Compoundieren der in Schritt (a) hergestellten Mischung um das Spritzgießen zu ermöglichen;
c) Einspritzen der in Schritt (b) compoundierten Mischung in eine Form für einen Haken mit einem geformten Körper;
d) Abkühlen und anschließendes Entnehmen des spritzgegossenen Hakens aus der Form.

13. Verwendung eines Hakens zum Aufhängen von Kabeln oder Schläuchen nach einem der Ansprüche 1 bis 11 für industrielle Anwendungen, vorzugsweise für das Kabelmanagement in der (petro-)chemischen Industrie, der Offshore-Industrie, der Stahl- und Aluminiumindustrie, der Schiffbauindustrie, der Öl- und Gasförderung, der Bergbauindustrie, der Fertigbauindustrie sowie in Kraftwerken und Anlagen.

## Revendications

1. Crochet de suspension de câbles et tuyaux, ledit crochet est composé de 45 à 800 grammes d'une composition moulée par injection composée d'une résine de polybutylène téréphtalate, de fibres de verre représentant de 18% à 22% du poids total de la composition, d'un ou plusieurs retardateurs de flamme et d'un ou plusieurs stabilisants UV ; et ledit crochet présente une capacité de charge maximum de 0,3 à 0,8 kg par gramme de composition.

2. Crochet de suspension de câbles et tuyaux selon la revendication 1, ledit crochet présente une forme comportant une première extrémité sphérique (1) et une seconde extrémité sphérique (3), lesdites extrémités sphériques (1, 3) étant reliées l'une à l'autre par un corps en forme de S (2).

3. Crochet de suspension de câbles et tuyaux selon la revendication 1 ou 2, dans lequel lesdits un ou plusieurs retardateurs de flamme sont sélectionnés à partir du groupe constitué par des minéraux, des composés organohalogénés et des composés organophosphorés.

4. Crochet de suspension de câbles et tuyaux selon la revendication 3, dans lequel lesdits minéraux sont sélectionnés à partir du groupe constitué par l'hydroxyde d'aluminium , l'hydroxyde de magnésium, la huntite et l'hydromagnésite, les hydrates, le phosphore rouge, les composés de bore et les borates.

5. Crochet de suspension de câbles et tuyaux selon la revendication 3, dans lequel lesdits composés organohalogénés sont sélectionnés à partir du groupe constitué par des dérivés d'acide chlorendique, des paraffines chlorées ; des organobromés, l'éther de décabromodiphényle, le décabromodiphényle éthane, des composés polymères bromés, des polystyrènes bromés, des oligomères de carbonate bromés, des oligomères époxydes bromés, l'anhydride tétrabromophtalique, le tétrabromobisphénol A) et l'hexabromocyclododécane, en variante, en association avec le tri ou pentoxyde d'antimoine ou l'antimoniate de sodium.

6. Crochet de suspension de câbles et tuyaux selon la revendication 3, dans lequel lesdits composés organophosphorés sont sélectionnés à partir du groupe constitué par du phosphate de triphénile, du bis(diphénylphosphate) de résorcinol, du phosphate de diphényle de bisphénol A, du phosphate de tricrésyle, des phosphonates, du méthylphosphonate de diméthyle, des phosphinates et du phosphinate de diéthyle d'aluminium.

7. Crochet de suspension de câbles et tuyaux selon la revendication 1 ou 2, dans lequel lesdits un ou plusieurs retardateurs de flamme sont sélectionnés à partir du groupe constitué par du phosphate de tris(2,3-dibromopropyle), des organophosphates chlorés, du tris(1, 3-dichloro-2-propyl)phosphate et du tétrakis(2-chloréthyl)dichloroisopentyldiphosphate.

8. Crochet de suspension de câbles et tuyaux selon l'une quelconque des revendications 1 à 7, dans lequel lesdits un ou plusieurs stabilisants UV sont sélectionnés à partir du groupe constitué par des oxanilides , des benzophénones, des benzotriazoles, des hydroxyphényltriazines et des photostabilisants à base d'amine inhibées.

9. Crochet de suspension de câbles et tuyaux selon l'une quelconque des revendications 1 à 8, dans lequel ladite composition moulée par injection comprend, en outre, des stabilisants thermiques.

10. Crochet de suspension de câbles et tuyaux selon la revendication 9, dans lequel lesdits stabilisants thermiques sont sélectionnés à partir du groupe constitué par des savons métalliques et du stéarate de calcium.

11. Crochet de suspension de câbles et tuyaux selon l'une quelconque des revendications 1 à 10, dans lequel ladite composition moulée par injection comprend, en outre, un ou plusieurs composés ou particules, colorants et/ou polyéthylène fluorescents.

12. Procédé de formation d'un crochet destiné à suspendre des câbles ou tuyaux selon l'une quelconque des revendications 1 à 11, le procédé comprend les étapes de :
a) préparation d'un mélange d'une résine de polyester thermoplastique, de fibres de verre représentant de 18% à 22% en poids total du mélange, d'un ou plusieurs retardateurs de flamme et d'un ou plusieurs stabilisants UV selon l'une quelconque des revendications 1 à 11 ;
b) séchage et malaxage du mélange de l'étape (a) afin de permettre le moulage par injection ;
c) injection du mélange malaxé de l'étape (b) dans un moule pour crochet présentant un corps en forme de S ;
d) refroidissement du crochet moulé par injection et extraction consécutive à partir dudit moule.

13. Utilisation d'un crochet destiné à suspendre des câbles ou tuyaux selon l'une quelconque des revendications 1 à 11 dans des applications industrielles, de préférence, de gestion de câble dans l'industrie chimique ou pétrochimique, l'industrie extra-côtière, l'industrie de l'acier et l'aluminium, l'industrie de la construction navale, l'extraction de pétrole et de gaz, l'industrie minière, l'industrie de la construction préfabriquée et les centrales électriques et usines.
